# EUROPEAN PATENT APPLICATION

(11) **EP 1 484 107 A1**
(43) Date of publication of application: **08.12.2004**
(21) Application number: 03744021.1
(22) Date of filing: 07.03.2003
(51) Int. Cl.: B01J 21/04, B01J 23/58, B01J 32/00, B01D 53/86

(54) **CARRIER HAVING ALUMINA CARRIED THEREON, CATALYST ELEMENT, AND METHOD FOR PREPARATION OF CARRIER HAVING ALUMINA CARRIED THEREON**

(30) Priority: 08.03.2002 JP 2002064449
(71) Applicant: NGK INSULATORS, LTD., Nagoya-shi Aichi 467-8530 (JP)
(72) Inventor: NODA, Naomi c/o NGK INSULATORS, LTD., Nagoya-shi, Aichi 467-8530 (JP); TAKAGI, Shigekazu c/o NGK INSULATORS, LTD., Nagoya-shi, Aichi 467-8530 (JP); SUZUKI, Junichi c/o NGK INSULATORS, LTD., Nagoya-shi, Aichi 467-8530 (JP)
(74) Representative: Paget, Hugh Charles Edward
(86) International application number: PCT/JP2003/002736
(87) International publication number: WO 2003/076067

(57) **Abstract**

A carrier having a specific structure, characterized in that it has alumina and, optionally, a substance liable to react with an alkali metal and/or an alkaline earth metal both used as a catalyst component and/or an alkali metal and/or an alkaline earth metal, which are disposed in the carrier or on the cell wall surface of the carrier; a method for production of the carrier; and a catalyst body comprising the carrier and a catalytic material coated thereon. The use of the carrier allows production of a catalyst body which comprises the carrier and a catalytic material coated thereon, containing an alkali metal and/or an alkaline earth metal, such as Li, Na, K, Ca or the like and which is less susceptible to the deterioration of the carrier caused by the above metal even when used over a long period of time.

## Description

### Technical Field

The present invention relates to a carrier having alumina coated thereon, a method for production of the catalyst, and a catalyst body. More particularly, the present invention relates to a carrier which is used for coating a catalytic material typical for a NOₓ adsorption catalyst for purification of automobile exhaust gas, containing an alkali metal or an alkaline earth metal, particularly Li, Na, K or Ca, and which can be used for production of a catalyst body wherein the deterioration of the carrier caused by an alkali metal or alkaline earth metal is suppressed and, even in use over a long period of time with a catalytic material coated on the carrier, there occurs substantially no deterioration of the carrier by the catalytic material; a method for production of the carrier; and a catalyst body comprising the carrier and, for example, a catalytic material (typical for a NOₓ adsorption catalyst) coated thereon, containing an alkali metal or an alkaline earth metal, particularly Li, Na, K or Ca.

### Background Art

In recent years, regulation for exhaust gas has been intensified and lean burn engine, direct injection engine, etc. have come into wide use. In this connection, NOₓ adsorption catalysts capable of purifying the NOₓ present in exhaust gas effectively in a lean atmosphere have been put into practical application. As the NOₓ adsorption component used in such a NOₓ adsorption catalyst, there are known alkali metals such as K, Na, Li, Cs and the like; alkaline earth metals such as Ba, Ca and the like; rare earth elements such as La, Y and the like; and so forth. Ba, in particular, is in wide use since the beginning of practical application of NOₓ adsorption catalysts. Recently, K which is superior in NOₓ adsorption capability in a high-temperature range has been tried for use.

NOₓ adsorption catalysts are generally constituted by coating a catalytic material containing the above-mentioned NOₓ adsorption component, on a carrier made of an oxide type ceramic material (e.g. cordierite) or a metal material (e.g. Fe-Cr-Al alloy). Such a carrier, however, has a problem in that it is liable to be corroded and deteriorated by alkali metals or some alkaline earth metals, particularly Li, Na, K and Ca when these metals have become active under a high-temperature exhaust gas. In particular, a cordierite carrier made of an oxide type ceramic material reacts with the above mentioned alkali metal or the like and generates cracks, which is a serious problem.

In catalyst bodies for purification of exhaust gas, active alumina has heretofore been used as a carrier matrix having a high specific surface area, for highly dispersing a catalytically active component represented by a noble metal or the like. However, the present invention differs in that, in a catalyst body comprising a carrier and a catalytic material coated thereon, containing an alkali metal and/or an alkaline earth metal, alumina is precoated on the carrier before catalyst loading in order to protect a carrier represented by cordierite honeycomb, from its contact and subsequent reaction with an alkali metal and/or an alkaline earth metal both present in a catalyst layer.

The present invention has been made in view of such conventional problems and aims at providing a carrier suitable for coating a catalytic material containing an alkali metal or alkali earth metal, for example, a NOₓ adsorption catalyst and, when used as a catalyst body, capable of suppressing the carrier deterioration caused by the alkali metal or alkaline earth metal and usable over a long period of time; a method for production of the carrier; and a catalyst body comprising the carrier and a catalytic material coated thereon.

### Disclosure of the Invention

According to the present invention, there are provided a carrier suitable for coating thereon a catalytic material containing an alkali metal and/or an alkaline earth metal, wherein alumina is disposed in the carrier or on the cell wall surface of the carrier; and a catalyst body comprising the carrier and a catalytic material coated thereon.

According to the present invention, there is also provided a method for producing a catalyst having alumina coated thereon, characterized in that it comprises a step of coating alumina on a carrier and, optionally, a step of coating on the carrier a substance liable to react with an alkali metal and/or an alkaline earth metal both used as a catalytic material and/or an alkali metal and/or an alkaline earth metal and further in that the thus-obtained carrier having alumina and, optionally, such a substance and such a metal, coated thereon, is fired.

### Best Mode for Carrying Out the Invention

In the present invention, alumina low in reactivity with an alkali metal and/or an alkaline earth metal both used as a catalytic material is disposed beforehand in a carrier and/or on the cell wall surface of the carrier. Thereby, the carrier is protected by alumina from the alkali metal and/or the alkaline earth metal even when a catalyst body comprising the carrier and a catalytic material coated thereon is exposed to high temperatures during the use, and the reaction of the carrier with such metals is suppressed; as a result, the deterioration of the carrier is suppressed.

Alumina is known to have various phases. In the present invention, the stability of alumina is important and γ-alumina, δ-alumina, η-alumina, θ-alumina, α-alumina, amorphous alumina or the like are suitable for use. In general, α-alumina is preferred for the high corrosion resistance depending upon the environment of carrier used; amorphous alumina is preferred because it easily forms a dense protective film; and γ-alumina is preferred because it has good affinity with the catalytic material used. A desired effect is obtainable substantially irrespective of the kind of the alumina phase used, as long as an alumina layer of intended thickness is formed, which is a surprise.

Incidentally, individual phases of alumina may be disposed singly or in combination of a plurality of phases. For example, mixed disposition of α phase and amorphous phase or of γ phase and amorphous phase is preferred because the property of α phase or γ phase is exhibited, in addition to the high density derived from amorphous phase.

As to the form of alumina when disposed, there is no particular restriction, and alumina may be disposed by itself or in a composite or mixture with other substance. However, from the standpoint of corrosion resistance, it is preferred to dispose alumina in a concentration of 90% by mass or more and is more preferred to dispose substantially alumina alone, in other words, only alumina. When other component is used in a composite or a mixture, it is preferred to select a component which per se has a high corrosion resistance to alkali metals and/or alkaline earth metals, or a component capable of increasing the corrosion resistance and heat resistance of alumina.

Incidentally, as the source of alumina, an alumina powder, preferably an alumina sol, more preferably an alumina powder and an alumina sol, further preferably substantially an alumina powder and an alumina sol alone are used. The alumina source is preferred to be substantially an alumina sol alone because its coating on the carrier can form a dense alumina layer. Also, coating of an alumina sol and an alumina powder is preferred because, as compared with the coating of an alumina sol alone, a higher firing temperature can be employed, no crack is generated on the surface of the formed alumina coat, and a required amount of alumina can be coated with less coating times. The kind of alumina used, coating method, firing conditions, etc. are described in detail below.

The specific alumina source used is selected appropriately depending upon the coating method used. For example, when coating is conducted using a solid (a powder), an oxide or the like is used; when coating is conducted using a liquid (a solution or a dispersion), a solution or dispersion of a nitrate, a sulfate, a hydroxide, a chloride, an organic acid salt, an alumina sol or the like is used (the liquid is hereinafter referred to as "alumina source-containing liquid"). Of these, there is preferred an alumina source which leaves no component other than alumina in the catalyst body obtained, in treatments such as firing and the like. As the method for disposing alumina in the carrier and/or between the carrier and the catalytic material coated thereon, the following methods can be mentioned.

### [Method for disposing alumina in carrier]

By immersing a carrier in an alumina source-containing liquid of relatively low viscosity, it is possible to infiltrate the liquid into a so-called virgin carrier (not coated with any catalyst or the like) to dispose the alumina source in the carrier. This method is used preferably when the carrier is porous, and can introduce an alumina source even into each open pore. There may also be used a method of adding an alumina source to the raw materials of carrier at the stage of carrier production. In this case, the alumina source may be added in the form of a solution or a dispersion or in the form of a solid (a powder) such as oxide or the like. The added alumina source may form a compound with other raw materials in the carrier production stage, but it is preferable that alumina remains as it is. Of the method of immersing a carrier in an alumina source-containing liquid and the method of adding an alumina source to carrier raw materials, the former immersion method is preferred because the exposure of carrier, i.e. the contact of carrier with alkali metal and/or alkaline earth metal in catalytic material is prevented. As a matter of course, the carrier can have the highest corrosion resistance when it is made of alumina per se; however, in this case, in order for the low thermal shock resistance of alumina to cause no problem, it is necessary, for example, to make temperature control during the use of carrier or restrict the application of carrier.

### [Method for forming alumina-containing precoating layer on cell wall surface of carrier]

Unlike the case of disposing alumina in a carrier, there is substantially no influence of the structure of the carrier used. In a specific method, a carrier is coated with a solution or dispersion of relatively high viscosity, containing an alumina sol or the like, whereby alumina can be disposed as a precoating layer between the carrier and a catalytic material layer for exhibiting a desired effect. Use of an alumina sol (50wt% by the solid content or more, preferably 90wt% or more of the total) as an alumina source is preferred because it can easily form a dense precoating layer. Use of substantially an alumina sol alone is more preferred.

As other method, an alumina powder, for example, is made into a slurry and the slurry is coated to form a precoating layer. There is also preferred a method of adding, in the slurry making, an organic binder and/or an inorganic binder, because the precoating layer formed is less susceptible to peeling. An alumina sol, in particular, is most preferred because it increases the proportion of alumina in precoating layer and also contributes to an increase in density. As the alumina powder, various phases such as mentioned above may be used suitably. Further, a plurality of kinds different in phase, particle diameter, composition, etc. may be used in a mixture, or may be coated singly in order. Incidentally, in any of these methods of forming a precoating layer, when the carrier used is porous, part of the solution or dispersion or the slurry may infiltrate into the carrier via the open pores, etc.; however, it causes no problem.

In the above, the method of disposing alumina in carrier and the method of forming alumina-containing precoating layer on cell wall surface of carrier have been described separately. The matters common to the two methods are described below.

Alternate coating of an alumina powder and an alumina sol is also a preferred coating method. In this case, coating of an alumina powder and then coating of an alumina sol can allow the formed coating layer to have a dense surface; meanwhile, coating of an alumina sol and then coating of an alumina powder can give higher adhesivity between carrier and coating layer. In any of these orders, an alumina sol may be used together as an inorganic binder, in coating of an alumina powder. When a plurality of alumina sources different in form, particle diameter, phase, concentration, etc. are used and they are coated in order, it is preferred to coat in the order of particle size (larger particles are coated earlier) for the property of outermost layer.

When an alumina sol is used, the content of Al₂O₃ in sol is preferably 3 to 30% by mass. The reason is that a content of less than 3% by mass invites more coating times and a content of more than 30% by mass gives a higher viscosity and may cause inconveniences such as easy plugging during coating. Furthermore, 5 to 25% by mass is more preferred.

When an alumina sol is used, the pH stabilizer therefor is preferably an acid such as HCl, HNO₃, CH₃COOH or the like. As the acid, an inorganic acid is preferred to an organic acid and, in particular, HNO₃ is very preferable. The size of the particles (colloid) constituting the alumina sol, when the carrier is porous (for example, a ceramic-made honeycomb structure), is selected so as to satisfy (average pore diameter of carrier ≧ average particle diameter of colloid), preferably (average pore diameter of carrier x 10% ≧ average particle diameter of colloid) so that the alumina sol can penetrate into the pores of the carrier. Specifically, the average particle diameter of colloid is preferred to be 500 nm or less. An average diameter of 200 nm or less is more preferred because alumina can cover the carrier surface in a dense state, after firing, and an average diameter of 100 nm or less is more preferred.

When an alumina powder is used, the particle diameters thereof, when the carrier is porous, is preferably determined so as to satisfy (average pore diameter of carrier ≧ average particle diameter of alumina powder), preferably (average pore diameter of carrier x 30% ≧ average particle diameter of alumina powder) so that the alumina powder can penetrate into the pores of the carrier. Specifically, the average particle diameter of alumina powder is preferred to be 1 µm or less. An average particle diameter of 0.5 µm or less is more preferred.

When an alumina powder and an alumina sol are used as a mixture, the preferred mixing ratio thereof is (alumina powder . Al₂O₃ in alumina sol = 1:0.2 to 1:4). When the alumina powder is mixed into the alumina sol so as to give a ratio of (alumina powder : Al₂O₃ in alumina sol = 1:4 or more), the effect derived from the alumina powder added can be obtained preferably; meanwhile, when the alumina sol is mixed so as to give a ratio of (alumina powder : Al₂O₃ in alumina sol = 1:0.2 or more), the denseness derived from the alumina sol can be obtained preferably. The mixing ratio of the alumina powder and the alumina sol is more preferably 1:0.5 to 1:2. In this range, the meritorious effects derived from the individual substances can be obtained in a good balance.

It is also preferred for coating the carrier to use the liquid obtained by mixing a powder of other material superior in corrosion resistance (e.g. mullite, zirconia, titania or SiC) instead of the alumina powder into the alumina source (such as alumina sol)-containing liquid.

When coating is conducted a plurality of times using one kind of coating material or a plurality of coating materials different in form, phase, particle diameter, composition and concentration, it is possible to conduct drying and firing after each coating, and it is also possible to conduct firing only once after last coating if a risk that the coating liquid applied earlier dissolves into the coating liquid applied later is small. In the latter case, it is preferred to conduct at least drying when the earlier coating has been completed. When the firing is conducted only once after last coating,the process can be simplified; while, when drying and firing are conducted in this order after each coating, different firing conditions can be set so as to match the individual coating liquids used. It is also possible that precoating is completed only by drying if a risk that the coating liquid applied earlier dissolves into the coating liquid applied later is small. In this case, because the firing after coating of catalytic material is combined with the firing after coating of alumina, the process can be simplified. As to the drying, rapid drying by box type drier or hot air type dryer is simple and efficient, and used suitably. When cracks on the surface of the coating become a problem, they can be alleviated by natural drying, moisture-controlled drying, vacuum freeze-drying or the like.

As mentioned above, after the coating, firing may be conducted after drying or without drying. As a matter of course, firing may be conducted after coating of a plurality of times, of one kind of coating material or different kinds of coating materials, or after each coating of such a coating material(s). When coating is conducted a plurality of times, coating materials different in composition, form, phase, particle diameter, etc. may be used alternately. When coating is conducted a plurality of times, it is possible to conduct firing after each coating, that is, repeat coating and firing. In this case, before and after the first firing, the same coating material may be used; or, before and after the first firing, coating materials different in composition, form, phase, particle diameter, etc. may be used. When firing is conducted twice, the first and second firings may be conducted under the same conditions or under different conditions.

It is also preferred to use a plurality of alumina sources different in form, phase, particle diameter, composition, concentration, etc. or an alumina source, as necessary, further together with a substance liable to react with an alkali metal and a later-described alkali metal and/or alkaline earth metal, and to employ in combination with "in-carrier disposition" and "intermediate layer formation".

When the carrier is porous, it is preferred to reduce, by coating, the water absorption of the carrier to 20% or less, further to 10% or less. The reason is that when alumina is coated and then a catalytic material slurry containing an alkali metal is carrier thereon, the infiltration of the slurry into the carrier can be suppressed by the reduced water absorption.

The method for disposing alumina in the carrier and/or on the cell wall surface of the carrier is not restricted to the above methods. In any method, when alumina has been coated, there is once conducted, for example, firing at a temperature of 250°C or more for fixation of the alumina. In order to carry a catalytic material on the alumina, it is preferred to form on the alumina a layer of a catalytic material capable of exhibiting a desired effect, for example, a NOₓ adsorption catalyst containing an alkali metal and/or an alkaline earth metal. Firing at 500°C or above can promise more reliable fixation. When an alumina source other than alumina per se is used in coating alumina on the carrier, it is preferred to conduct firing at a temperature equal to or higher than a temperature at which the alumina source used is dehydrated, decomposed or oxidized to form alumina. Particularly when a coating material containing an alumina sol is coated, fixation of alumina may be conducted only by drying at 80 to 250°C because the alumina sol solidifies at 80 to 150°C. In this case, the process is simplified and, moreover, formation of thermal cracks on the surface of the coating can be suppressed.

Also, by controlling the firing temperature, it is possible to allow a desired alumina phase to appear. For example, when an α phase of high corrosion resistance is needed, it may be obtained by coating an α-alumina powder as a raw material; however, it is also preferred to conduct firing at a temperature of 1,000°C or above in the atmosphere to form an α-alumina phase after coating using an alumina powder of other phase (e.g. γ-alumina) or other alumina source, for example, alumina sol, because this can produce a dense α-alumina phase. A temperature of 1,100°C or above is more preferred because formation of α-alumina phase is accelerated. It is also preferred that the alumina phase is completely an α phase, after firing. When a γ-alumina phase is desired, it is preferred to conduct firing at 900°C or below. In producing a catalyst body continuously, control of alumina phase by firing temperature is also possible in the firing step after coating of catalytic material; however, it is necessary that the firing temperature is set in a range in which no deterioration of catalytic material takes place.

As described above, coating of alumina on the carrier may be conducted a plurality of times as necessary. In that case, it is possible that only impregnation or coating is conducted a plurality of times with a drying step interposed between them and firing is conducted at last, or firing is conducted even between a plurality of impregnations or coatings. In this case, the kind, properties, etc. of coating material (e.g. alumina source), the method of coating, the conditions of drying and firing, etc. may each be the same or different in the plurality of times. In a preferred case, for example, in the first coating, an alumina source is impregnated or coated and then firing is conducted at a temperature of at least 1,000°C, preferably at least 1,100°C to form a dense α-alumina phase, and in the second coating, an alumina source is impregnated or coated and then firing is conducted at a temperature of 900°C or below to form a γ-alumina phase for good affinity with a catalytic material further coated thereon. When an amorphous alumina is mixed into each of the γ-alumina phase and the α-alumina phase, the resulting coating can have dense surface in addition to the properties of individual alumina phases.

As to the shape of the carrier used in the present invention, there is no particular restriction. With any carrier having one shape of monolithic honeycomb, pellet, bead, ring, foam, etc., the above-mentioned effect of suppression of carrier deterioration can be obtained. When there is used, of these, a honeycomb-shaped carrier (a honeycomb carrier) having a large number of throughholes (cells) divided by thin partition walls, the largest effect is obtained.

Incidentally, when the present carrier is used for carrying an alkali metal thereon as a catalyst, it is also preferred to use alumina in combination with a component liable to react with alkali metals (this combination use is disclosed in JP-A-2000-279810) because the combination use gives an even higher effect of suppression of carrier deterioration. For example, when alumina is combined with silica liable to react with alkali metals and coating on the carrier is made first with silica and then with alumina thereon, alumina (an anti-corrosive material) can protect the carrier against the K diffusing from a catalyst layer and lastly silica can trap K diffusing into a carrier; thus, the protection of the carrier can be made in two-stage different actions.

It is also preferred to use alumina in combination with at least one kind of alkali metal and/or alkaline earth metal according to the method described in JP-A-2002-282702 (invented by the present inventors), because this combination use gives an even higher effect of suppression of carrier deterioration. When alumina is used with potassium silicate (K₂SiO₃) (containing an alkali metal) or barium oxide (containing an alkaline earth metal), the protection of the carrier can be made in different two-stage actions, for example, by coating of potassium silicate on alumina or coating of alumina on barium oxide. Alternatively, it is possible to use alumina together with the at least one kind of alkali metal and/or alkaline earth metal. Therefore, the description of JP-A-2002-282702 is incorporated herein by reference.

Also when alumina is used in combination with the above-mentioned substance liable to react with an alkali metal and/or an alkaline earth metal both used as a catalyst component, and/or with the above-mentioned alkali metal and/or alkaline earth metal, a more preferred result is obtained by using substantially a sol alone for all the coating materials (e.g. silica) other than alumina.

When a plurality of components different in function are coated as mentioned above, the individual functions are exhibited more effectively by coating them separately, for example, in layers; however, when a plurality of components same in function are coated, they may be coated in mixture, of course.

The present invention exhibits its effect when applied to various carrier materials; therefore, there is no particular restriction as to the material of carrier and it may be a ceramic, a metal, etc. The present invention can be preferably applied to, for example, an oxide type ceramic material such as cordierite, mullite, alumina, zirconia, titania, spinel, zirconyl phosphate, aluminum titanate, Gecordierite or the like; a non-oxide type ceramic material such as SiC, SiN or the like; and a metal material such as Fe-Cr-Al alloy or the like. When there is used, in particular, an oxide type ceramic carrier liable to be corroded by alkali metals and alkaline earth metals, a large effect is obtained, and the present invention is very effective to a cordierite carrier widely used in catalysts for purification of automobile exhaust gas. The present invention is also applicable preferably to carriers of mixture or composite type, made of two or more kinds of materials; for example, carriers made of a material obtained by bonding mullite particles or SiC particles with cordierite, particularly a carrier containing 10% or more of cordierite as a component.

The shape of through-holes (cells) of honeycomb carrier may be any of a circle, a polygon, a corrugation, etc. The external shape of honeycomb carrier can be made so as to have a desired shape fitting with the internal shape of an exhaust gas system in which the carrier is provided.

As to the cell density of honeycomb carrier, there is no particular restriction, either. However, the cell density is preferably 6 to 1,500 cells/in. ² (0.9 to 233 cells/cm²) when the carrier is used as a catalyst carrier. The thickness of the partition wall of honeycomb carrier is preferably 20 to 2,000 µm. The diffusion of alkali metal and/or alkaline earth metal from catalytic material to partition wall center of carrier is easy in the case that the partition wall is a thin wall of 20 to 200 µm in the thickness. Therefore, the necessity of the present invention becomes high, and the effect of suppression of carrier deterioration also becomes large.

There is no particular restriction, either, as to the porosity of honeycomb carrier. However, when the porosity is 10% or more, further 20% or more, the diffusion of alkali metal and/or alkaline earth metal through open pores of carrier is easy; therefore, the necessity of the present invention is high; and the effect of suppression of carrier deterioration is large. Incidentally, the thermal expansion coefficient of the carrier after coating is preferably 8.0x10⁻⁶ /°C or less, more preferably 4.0x10⁻⁶ /°C or less, in view of the thermal shock resistance required for the catalyst body for automobile exhaust gas. A thermal expansion coefficient of 2.0x10⁻⁶ /°C or less enables mounting of catalyst body at a position near engine.

The amount of alumina disposed on the carrier is preferably 0.5 to 200 g /liter (unit volume of catalyst body). When the amount is less than 0.5 g/liter, the resulting effect of suppression of carrier deterioration is small; when a amount of more than 200 g/liter is coated on the same carrier as NOₓ adsorption catalyst, the clogging of cells may occur when the carrier is a honeycomb carrier. The amount is more preferably 10 to 100 g/liter, further preferably 30 to 80 g/liter. 40 to 70 g/liter is particularly preferred from the standpoint of the balance between prevention of crack generation and suppression of flexural strength decrease and pressure loss. Needless to say, the above amount of alumina does not contain the amount of the alumina used as a matrix material of high specific surface area for highly dispersing a catalytic active component (represented by a noble metal or the like) which is used depending upon the application of obtained catalyst body.

The thickness of alumina layer formed on the carrier shall be 20 µm or less after firing, preferably 10 µm or less, when measured at a section vertical to the axial direction of carrier with one side of a partition wall of carrier cell around the center of the partition wall using an electron microscope. A thickness of more than 20 µm is not preferred because of an increased pressure loss.

The viscosity of any coating liquid represented by alumina sol is ordinarily 10,000 mPa.s or lower, preferably 500 mPa.s or less, further preferably 30 mPa.s or lower. A viscosity higher than 10,000 mPa.s may make coating difficult when the carrier is a honeycomb body. A viscosity higher than 500 mPa.s may cause the clogging of cells depending upon the carrier used, which needs care. A viscosity of 30 mPa.s or lower is preferred because the coating liquid infiltrates appropriately even into the pores of carrier and a dense alumina layer of high adhesivity is formed.

The pH of alumina sol is ordinarily 2.0 to 6.0, preferably 3.0 to 5.0. A pH lower than 2.0 is not preferred because the carrier is corroded by immersion in the coating liquid when the carrier is not an acid-resistant material. With a pH higher than 6.0, the particles in sol may cause agglomeration.

Alumina may contain other metal and/or a metal oxide, a carbide, a nitride, etc. as long as they do not impair the action of alumina intended by the present invention. However, it is preferred that alumina contains no noble metal as catalyst, or the like in view of the high-temperature stability. Further, in order to effectively protect the carrier from, for example, alkali metals and/or alkaline earth metals, it is more preferred that alumina is formed as a single alumina layer between the carrier and a catalyst layer containing at least an alkali metal and/or an alkaline earth metal. In other words, between the carrier and a catalyst layer containing an alkali metal and/or an alkaline earth metal, substantially an alumina layer alone may be formed, or, as described later, alumina may be laminated on and/or beneath a composite or mixed layer of alumina and other component. As a matter of course, in producing a catalyst body, the catalyst layer formed may contain a catalyst other than so-called NOₓ catalyst, for example, a noble metal (e.g. Pt, Pd and/or Rh) for combustion of hydrocarbon, etc. Further, a separate catalyst layer containing a noble metal (e.g. Pt, Pd and/or Rh) may be formed on a NOₓ catalyst layer, with no restriction.

The catalyst body of the present invention may be applied together with other purification materials applied to exhaust gas systems, such as NOₓ adsorption catalytic material comprising other components, different kind of catalytic material represented by three-way catalyst, cocatalyst represented by Ce oxide and/or Zr oxide, HC adsorption material, and the like. In that case, these other purification materials may be mixed into the catalytic material of the present catalyst body, but they are preferred to be laminated thereon in layers for higher heat resistance. Alternatively, they may be separately disposed on the upstream/downstream portions of the present catalyst body. Further alternatively, one may arbitrarily use the present catalyst body by combining it with those materials prepared as independent bodies in an exhaust gas system.

### [Examples]

The present invention is described more specifically below by way of Examples. However, the present invention is in no way restricted by these Examples.

### [Preparation of slurries for alumina coating]

### Slurry A for alumina coating:

A commercial Al₂O₃, sol and water were added to a commercial γ-Al₂O₃ powder (specific surface area: 200 m²/g). The mixture was pulverized in a pot mill to prepare slurry A for alumina coating. The amount of the Al₂O₃ sol added was such that the solid content (the weight of Al₂O₃ contained in the Al₂O₃ sol) thereof took 50% by mass of the total Al₂O₃ in slurry, and water was appropriately added so that the slurry could have a viscosity allowing easy coating.

### Slurries Bs for alumina coating:

Slurries B1, B2 and B3 for alumina coating were obtained in the same manner as in preparation of slurry A for alumina coating except that an α-Al₂O₃ powder was used in place of the commercial γ-Al₂O₃ powder and the ratio of the Al₂O₃ amounts in the α-Al₂O₃ powder and the Al₂O₃ sol was set at three levels of 1:1, 1:0.1 and 1:0.3.

### Slurry B4 for alumina coating:

Slurry B4 for alumina coating was obtained in the same manner as in preparation of slurry A for alumina coating except that, to a commercial α-Al₂O₃ powder, 10% by mass in term of the superaddition of an organic binder of acrylic type (ARON AS-7503, a product of Toagosei Co., Ltd.) and an appropriate amount of water were added.

### Slurry C for alumina coating:

Slurry C for alumina coating was obtained in the same manner as in preparation of slurry A for alumina coating except that a 1:1 mixture of an α-Al₂O₃ powder and a mullite powder was used in place of the commercial γ-Al₂O₃ powder and the ratio of the Al₂O₃ amounts in the 1:1 mixture of an α-Al₂O₃ powder and a mullite powder and the Al₂O₃ sol was set at 1:1.

### [Preparation of slurry for coating of NOₓ adsorption catalyst]

A commercial γ-Al₂O₃ powder (specific surface area: 200 m²/g) was immersed in a mixed solution of a (NH₃)₂Pt(NO₂)₂ aqueous solution and a KNO₃ aqueous solution. The mixture was stirred in a pot mill for 2 hours; then, water was removed by vaporization to dryness; the residue was dry-disintegrated and fired in an electric oven at 600°C for 3 hours. To the resulting (Pt + K)-predoped γ-Al₂O₃ powder were added a commercial Al₂O₃ sol and water, and the mixture was wet-ground in a pot mill to prepare a slurry for coating. The ratio of γ-Al₂O₃, Pt and K amounts was adjusted at the stages of preparation of the mixed solution and immersion of γ-Al₂O₃ powder therein so that when the slurry was coated on a honeycomb carrier, final firing was completed, and the amount of NOₓ adsorption catalyst coated was 100 g per liter of honeycomb volume, the weight of Pt element became 30 g per ft³ of honeycomb volume (1.06 g per liter) and the weight of K element became 20 g per liter of honeycomb volume. The Al₂O₃ sol was added in such an amount that its solid content (Al₂O₃ amount) became 5% by mass of the total Al₂O₃ amount in the obtained slurry, and water was added appropriately so that the slurry could have a viscosity allowing easy coating.

### [Preparation of samples]

### (Example 1)

First, a cordierite honeycomb carrier [partition wall thickness: 6 mil (0.15 mm), cell density: 400 cpsi (62 cells/cm²), porosity: 30%] was immersed in a commercial Al₂O₃ sol. The excessive liquid in the carrier cells was removed by blowing and the resulting carrier was dried. The amount of the Al₂O₃ sol coated was adjusted so as to become 70 g per liter of honeycomb carrier volume, after firing. When the amount coated was short after one time immersion and drying, immersion and drying was repeated until the intended amount was reached. The resulting honeycomb material, which was a so-called primary carrier having alumina coated thereon (hereinafter referred to simply as alumina-coated carrier), was fired in an electric oven at 600°C for 1 hour. After the firing, the honeycomb material was coated with the above-mentioned slurry for coating of NOₓ adsorption catalyst (hereinafter, abbreviated as "NOₓ adsorption catalyst slurry"), followed by drying. This step (coating and drying) was as necessary repeated until the amount of the NOₓ adsorption catalyst coated became 100 g per liter. Thereafter, firing was again conducted in an electric oven at 600°C for 1 hour to obtain NOₓ adsorption catalyst body 1.

### (Example 2)

NOₓ adsorption catalyst bodies 2(a), 2(b) and 2(c) were obtained in the same manner as in Example 1 except that the firing conditions after coating of Al₂O, sol were 1,200°C and 3 hours and that the amount of the Al₂O₃ sol coated was adjusted so as to become, respectively, 70 g per liter of honeycomb carrier volume, 30 g per liter, and 90 g per liter, after firing to produce NOₓ adsorption catalyst bodies 2(a) to 2(c).

### (Example 3)

NOₓ adsorption catalyst body 3 was obtained in the same manner as in Example 1 except that slurry A for alumina coating (which was a 1:1 mixture of a γ-alumina powder and an alumina sol) was used in place of the commercial Al₂O₃ sol. The use amount of slurry A for alumina coating was adjusted so that the total of the Al₂O₃ derived from the γ-Al₂O₃ powder and the Al₂O₃ derived from the Al₂O₃ sol became 70 g per liter after firing.

### (Example 4)

NOₓ adsorption catalyst body 4 was obtained in the same manner as in Example 3 except that the firing conditions after coating of slurry A for alumina coating were 1,200°C and 3 hours.

### (Example 5)

NOₓ adsorption catalyst bodies 5(a), 5(b), 5(c), 5(d) and 5(e) were obtained in the same manner as in Example 3 except that NOₓ adsorption catalyst body 5(a) was produced by using slurry B1 for alumina coating in place of slurry A for alumina coating and conducting firing at 600°C for 1 hour and that NOₓ adsorption catalyst bodies 5(b) to 5(e) were produced by using slurries B1, B2, B3 and B4 for alumina coating, respectively, and conducting firing at 1,200°C for 3 hours.

### (Comparative Example and Reference Example)

The same cordierite honeycomb material as used in Example 1 was coated with the NOₓ adsorption catalyst slurry, followed by drying. This step (coating and drying) was as necessary repeated until the amount of the NOₓ adsorption catalyst coated became 100 g per liter. Thereafter, firing was conducted in an electric oven at 600°C for 1 hour to obtain NOₓ adsorption catalyst body 6.

### (Example 6)

NOₓ adsorption catalyst body 7 was obtained in the same manner as in Example 1 except that there were repeated two times the immersion of cordierite honeycomb carrier in Al₂O₃ sol, the drying of carrier, and the firing of honeycomb material in electric oven at 600°C for 1 hour. The amount of the Al₂O₃ sol coated was adjusted so as to become 70 g per liter in total after two times of firing.

### (Example 7)

NOₓ adsorption catalyst bodies 8(a) to 8(m) were obtained in the same manner as in Example 2 except that the immersion of cordierite honeycomb carrier, the drying of carrier, the conditions of firing of honeycomb material in electric oven, and the amount of coating were as shown in Table 1 and Table 2.

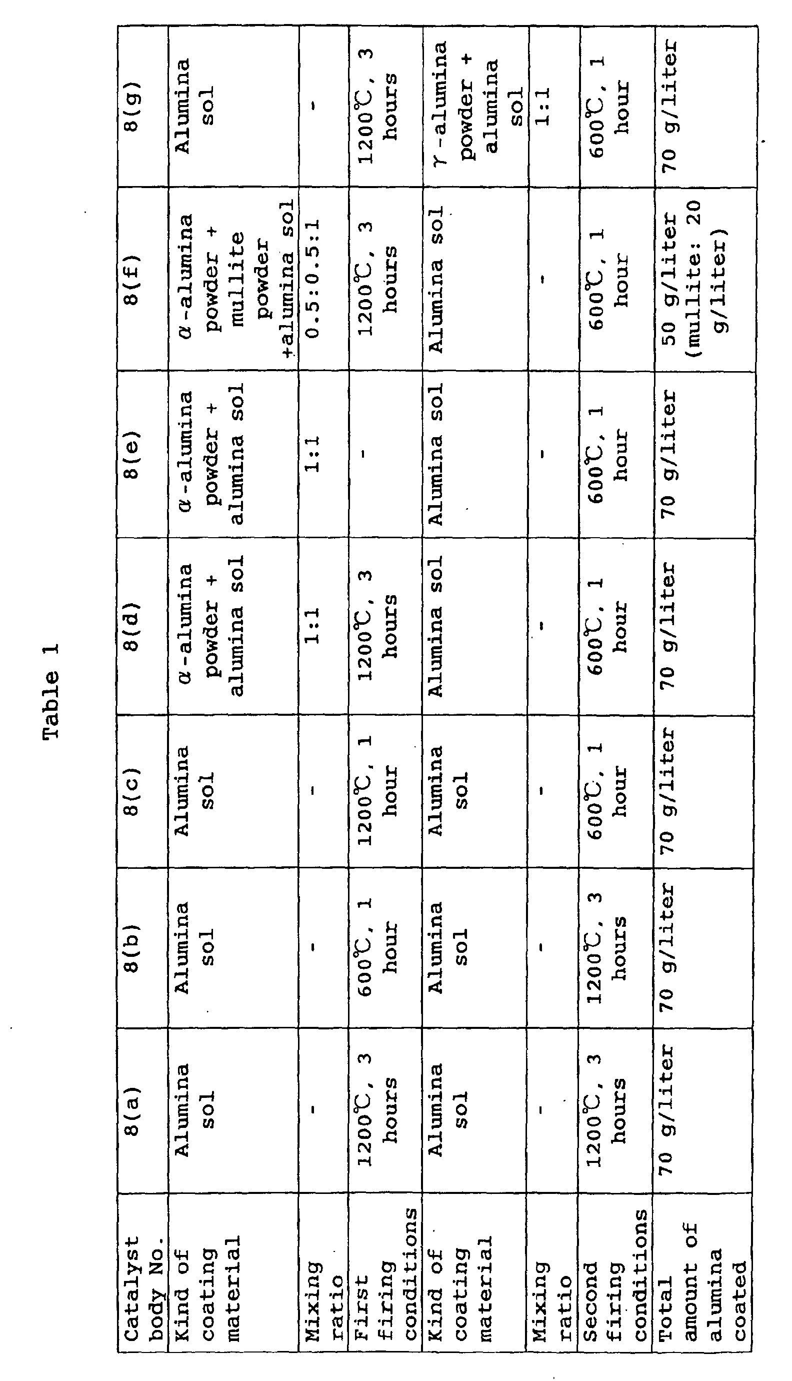

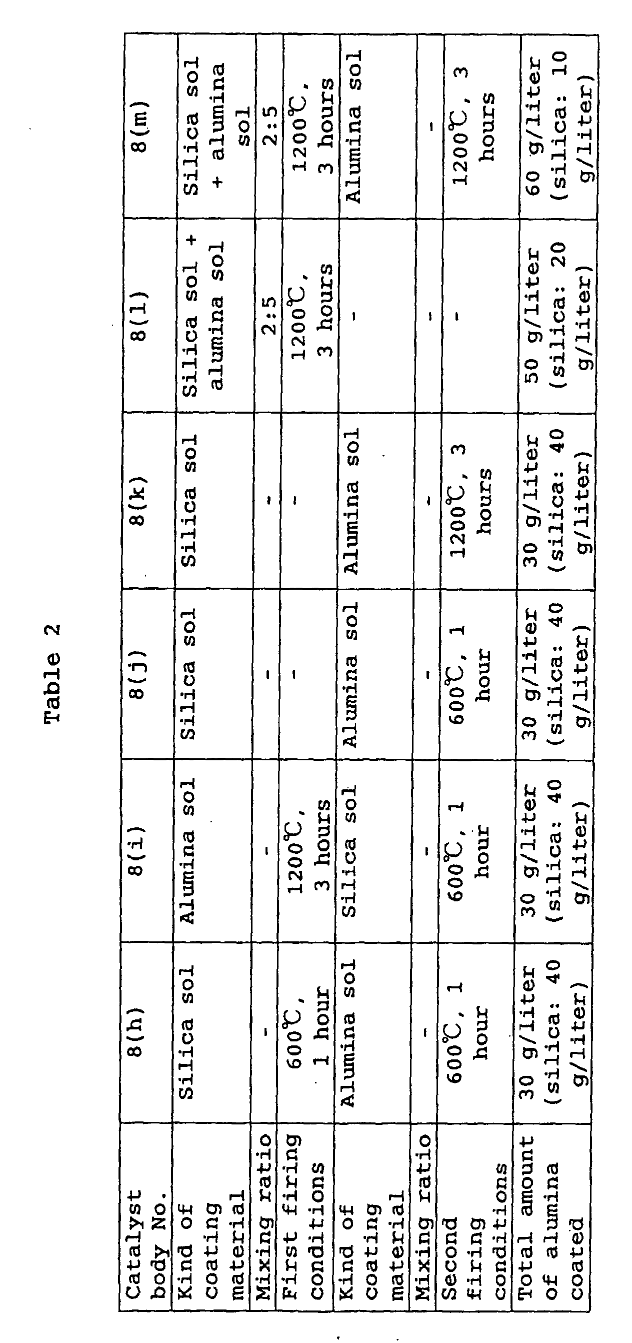

### [Durability test]

The above-obtained NOₓ adsorption catalyst bodies 1, 2, 3(a) to 3(c), 4, 5(a) to 5(e), 6, 7, and 8(a) to 8(m) were subjected to an accelerated durability test at 850°C for 30 hours in an electric oven with 10% of moisture.

Also, for reference, a cordierite honeycomb carrier having nothing coated thereon was subjected to the same accelerated durability test.

### [Evaluation for effect of suppression of carrier deterioration]

NOₓ adsorption catalyst bodies 1, 2, 3(a) to 3(c), 4, 5(a) to 5(e), 6, 7, and 8(a) to 8(m) and NOₓ adsorption catalyst body 6 (Comparative Example) were examined for the degree of cracking after durability test, by appearance observation and fine structure observation by electron microscope. Incidentally, as to the degree of cracking, no crack was reported as 0 and generation of crack which was regarded to become a problem in practical application, was reported as 10; thus, the degree of cracking was evaluated in 11 levels. Further, initial flexural strength and after-durability-test flexural strength were compared. The results thereof are shown in Table 3.

**Table 3**

| Example, Comparative Example, etc. | No. of NOₓ adsorption catalyst body | Degree of crack generation (after durability test) | Reduction in flexural strength (%) * |
|---|---|---|---|
| Example 1 | 1 | 4 | 34 |
| Example 2 | 2(a) | 3 | 25 |
| Example 2 | 2(b) | 6 | 46 |
| Example 2 | 2(c) | 3 | 23 |
| Example 3 | 3 | 5 | 40 |
| Example 4 | 4 | 4 | 32 |
| Example 5 | 5(a) | 4 | 36 |
| Example 5 | 5(b) | 3 | 31 |
| Example 5 | 5(c) | 6 | 51 |
| Example 5 | 5(d) | 5 | 38 |
| Example 5 | 5(e) | 8 | 66 |
| Example 6 | 7 | 3 | 27 |
| Example 7 | 8(a) | 2 | 18 |
| Example 7 | 8(b) | 2 | 22 |
| Example 7 | 8(c) | 1 | 19 |
| Example 7 | 8(d) | 1 | 25 |
| Example 7 | 8(e) | 3 | 30 |
| Example 7 | 8(f) | 1 | 25 |
| Example 7 | 8(g) | 1 | 28 |
| Example 7 | 8(h) | 1 | 7 |
| Example 7 | 8(i) | 1 | 14 |
| Example 7 | 8(j) | 1 | 7 |
| Example 7 | 8(k) | 0 | 3 |
| Example 7 | 8(l) | 1 | 9 |
| Example 7 | 8(m) | 0 | 5 |
| Comparative Example | 6 | 10 | 74 |
| Reference Example | - | 0 | 1 |

| | | | |
|---|---|---|---|
| * : Reduction in flexural strength (%) = [(initial strength - after-durability-test strength)/initial strength] x 100 | | | |

It is appreciated from Table 3 that each of NOₓ adsorption catalyst bodies 1, 2, 3(a) to 3(c), 4, 5(a) to 5(e), 7, and 8(a) to 8(m) (Examples 1 to 7) according to the present invention, as compared with NOₓ adsorption catalyst body 6 free from alumina (Comparative Example), is low in cracking of carrier and also in reduction in strength. The results of Table 3 indicate that when alumina alone is disposed, use of an alumina sol, as compared with mixed use of an alumina powder and an alumina sol, tends to give a superior NOₓ adsorption catalyst body. Among different alumina powders, use of organic binder gives no satisfactory effect as compared with no use of organic binder; and an α-alumina powder tends to give a superior effect as compared with a γ-alumina powder. As to firing conditions, firing at 1,200°C (a higher temperature) is preferred and two-times firing gives a superior result as compared with one-time firing. Further, it is clear that combined disposition of silica and alumina gives a superior NOₓ adsorption catalyst body.

### Industrial Applicability

As described above, in the catalyst body of the present invention, there are disposed, in the carrier and/or on the cell wall surface of the carrier, an alumina low in reactivity with an alkali metal and/or an alkaline earth metal both used as a catalyst component, and, optionally, a substance liable to react with an alkali metal and/or an alkaline earth metal both used as a catalyst component and/or an alkali metal and/or an alkaline earth metal; thereby, the carrier, even when exposed to high temperatures, is protected by the alumina from the alkali metal and/or the alkaline earth metal both present in the catalytic material of the catalyst body, and the reaction between these metals with the carrier is suppressed. As a result, the deterioration of carrier caused by alkali metal and/or alkaline earth metal is suppressed, and the present catalyst body, even when used over a long period of time with the carrier coating thereon a catalytic material such as mentioned above, can withstand such use.

## Claims

1. A carrier having a structure selected from the group consisting of monolithic honeycomb, pellet, bead, ring and foam, **characterized in that** alumina is disposed in the carrier and/or on the cell wall surface of the carrier.

2. A carrier according to Claim 1, wherein, in the carrier and/or on the cell wall surface of the carrier is further disposed a substance liable to react with an alkali metal and/or an alkaline earth metal both used as a catalyst component, and/or an alkali metal and/or an alkaline earth metal.

3. A carrier according to Claim 2, wherein the substance liable to react with an alkali metal and/or an alkaline earth metal is silica.

4. A carrier according to Claim 2 or 3, wherein the silica is disposed directly on the carrier and alumina is disposed thereon.

5. A carrier according to any of Claims 1 to 4, wherein the carrier has a honeycomb structure.

6. A carrier according to any of Claims 1 to 5, wherein the carrier contains cordierite as a major component.

7. A carrier according to any of Claims 1 to 6, wherein the alumina contains at least one kind selected from the group consisting of γ-alumina, δ-alumina, η-alumina, θ-alumina, α-alumina and amorphous alumina.

8. A carrier according to Claim 7, wherein the alumina contains α-alumina as a major component.

9. A catalyst body comprising a carrier set forth in any of Claims 1 to 8 and a catalytic material carrier on the carrier.

10. A catalyst body according to Claim 9, wherein the catalytic material contains an alkali metal and/or an alkaline earth metal.

11. A method for producing a carrier having alumina coated thereon, **characterized in that** alumina is coated on a carrier to obtain a primary carrier having alumina coated thereon and then the obtained carrier is fired at least once.

12. A method for producing a carrier having alumina coated thereon according to Claim 11, wherein the primary carrier having alumina coated thereon is dried and then fired at least once.

13. A method for producing a carrier having alumina coated thereon according to Claim 11 or 12, wherein the primary carrier having alumina coated thereon is fired at least once at a temperature of 200°C or higher.

14. A method for producing a carrier having alumina coated thereon according to any of Claims 11 to 13, wherein the primary carrier having alumina coated thereon is fired at least once at a temperature of 1,300°C or lower.

15. A method for producing a carrier having alumina coated thereon according to any of Claims 1 to 14, wherein as the alumina to be coated, there is used any one kind selected from an alumina powder, an alumina sol, and a combination of an alumina powder and an alumina sol.

16. A method for producing a carrier having alumina coated thereon according to any of Claims 11 to 13, wherein as the alumina to be coated, an alumina sol is used.

17. A method for producing a carrier having alumina coated thereon according to any of Claims 11 to 16, wherein the method comprises a step of coating a substance liable to react with an alkali metal and/or an alkaline earth metal both used as a catalyst component, and/or an alkali metal and/or an alkaline earth metal.

18. A method for producing a carrier having alumina coated thereon according to Claim 17, wherein as the substance liable to react with an alkali metal and/or an alkaline earth metal both used as a catalyst component, and/or the alkali metal and/or the alkaline earth metal, there is used a sol of a substance liable to react with an alkali metal and/or an alkaline earth metal both used as a catalyst component, and/or a sol of an alkali metal and/or an alkaline earth metal.

19. A method for producing a carrier having alumina coated thereon according to Claim 17 or 18, wherein the sol of a substance liable to react with an alkali metal and/or an alkaline earth metal both used as a catalyst component, and/or the sol of an alkali metal and/or an alkaline earth metal is a silica sol.

20. A method for producing a carrier having alumina coated thereon according to any of Claims 11 to 13, wherein the firing is conducted twice.
